(19) Europäisches Patentamt

European Patent Office

Office européen des brevets

(11) **EP 1 134 607 A2**

(12) **EUROPEAN PATENT APPLICATION**

(43) Date of publication:
**19.09.2001 Bulletin 2001/38**

(51) Int Cl.7: **G02B 27/62**, G02B 6/42,
G01M 11/02

(21) Application number: **00307875.5**

(22) Date of filing: **12.09.2000**

(84) Designated Contracting States:
**AT BE CH CY DE DK ES FI FR GB GR IE IT LI LU
MC NL PT SE**
Designated Extension States:
**AL LT LV MK RO SI**

(30) Priority: **14.09.1999 US 395198**

(71) Applicant: **JDS Uniphase Inc.**
**Nepean, Ontario K2G 5W8 (CA)**

(72) Inventors:
• **Prunes, Vasile**
**Ottawa, Ontario K1Y 4P8 (CA)**

• **Taylor, Robert S.**
**Stittsville, Ontario K2S 1R3 (US)**
• **Colbourne, Paul**
**Nepean, Ontario K2J 3Z7 (CA)**

(74) Representative: **McKechnie, Neil**
**Kennedys Patent Agency Limited**
**Floor 4, Queens House,**
**29 St. Vincent Place**
**Glasgow G1 2DT (GB)**

(54) **Aligning and manufacturing components**

(57)   An object system is regarded as being equivalent to a system for generating an output of an $O_2$ sensor (12) or exhaust gas sensor from a target combined air-fuel ratio that is produced by combining target air-fuel ratios KCMD for respective cylinder groups (3, 4) according to a filtering process of the mixed model type. With the equivalent system as an object to be controlled, an air-fuel ratio processing controller (15) determines a target combined air-fuel ratio, and determines a target air-fuel ratio KCMD for each of the cylinder groups (3, 4) from the target combined air-fuel ratio. The air-fuel ratios in the cylinder groups (3, 4) are manipulated into the target air-fuel ratio according to a feed-forward control process.

Fig. 1

EP 1 134 607 A2

## Description

## Field of the Invention

One aspect of this invention relates generally to test devices and more particularly to a distributed testing system providing the capability of testing a plurality of optical components at multiple sites; another aspect of this invention relates to the alignment and manufacture of optical components using a processor controlled auto-aligner.

There are several ways of testing an optical component for loss and other characteristics. For example, a single optical signal of known wavelength and amplitude can be launched into a component, and losses can be deduced from a signal measured at the output of the device. Alternatively, a plurality of signals can be launched into the device sequentially and similar measurements made for each wavelength. In a manufacturing and production environment, it is preferable to test devices over a range of wavelengths of interest as quickly as possible. Generally, a testing station for testing optical components requires a very costly tunable laser. In operation, these lasers are tuned to a plurality of wavelengths, one at a time, and have their output signal fed into a device under test (DUT). The purpose of providing a signal to a DUT at various wavelengths within a predetermined range of wavelengths, is to detect losses through the DUT at each or at several wavelengths of interest. Of course it would be possible to provide signals from several discrete lasers to a DUT, however, in a production environment, such a scheme would likely not be practicable. When using a tunable laser as mentioned above, it is preferred if electronic circuitry is provided to correlate an output response for the DUT with a particular wavelength of light propagating through the device at a particular instant in time.

Systems are currently known that employ a tunable laser in which the tuning mechanism stops at each wavelength to be tested. However, this process takes several minutes when a large number (i.e. > 100) of wavelengths are to be measured. The wavelength accuracy is limited by the mechanical tolerances of the tuning mechanism.

One aspect of this continuation-in-part application that is of particular importance relates to the manufacture of components.

Although the testing of components has a relatively high importance, providing for the testing of components during manufacture can offer significant cost savings. For example, it is possible to obviate the practice of discarding components that don't meet a required specification by relatively tuning the components; more particularly automatically varying their relative alignment during the manufacturing stage.

Yet still further, there is a significant advantage to tuning or aligning components before, and after the application of adhesive such as epoxy, or adhesives that are cured thermally. For instance, it is found that by first aligning two components such that they provide optimum coupling of a light signal passing therethrough, and then performing a final step of applying adhesive, often provides spurious results; as the adhesive cures, it tends to shrink and pull the components out of alignment.

A software-controlled system for controlling an alignment stage requires actuators for relatively positioning two components in a desired manner. Since the components to be aligned are designed in their combination to pass or reflect light, a test signal is provided, and one or more detectors provide an indication of the alignment condition to a suitably programmed processor. Either the same processor or one coupled thereto, controls the alignment stage to provide optimum alignment in dependence upon the detected test signal propagating through or reflecting from one or both of the components. If a system of this type were to use a dithering approach to determining a maximum intensity signal after passing light through the components and adjusting their relative alignment, error would likely occur, as there are often several intensity peaks within a range of wavelengths being scanned. Thus, within a first group of channels being tested with appropriate wavelengths of test light there may be one or more peaks, and within a second group of channels being tested with appropriate wavelengths of test light there may be one or more other peaks.

The system in accordance with this invention, obviates these potential errors by first determining a maximum peak in a wavelength band of interest

Therefore, it is an object of the invention to provide a system wherein optical components can be automatically aligned and tested during manufacture.

It is a further object of the invention to provide a system wherein optical components to be affixed in an optimum position can be automatically aligned, tested, and re-aligned after the application of adhesive by an auto-aligner.

It is an object of this invention to provide a processor driven system for controlling the relative alignment of components prior to and after an adhesive is applied to affix the components in an aligned state.

It is an object of this invention to provide an apparatus for determining the wavelength of a tunable laser signal while it is tuning, so that the tuning mechanism does not have to stop at each wavelength, thus speeding up the measurement. The wavelength accuracy is not affected by the mechanical tolerances of the tuning mechanism.

It is an object of this invention, to provide a central system, which generates signals for testing optical devices at a plurality of testing stations, remote from the central system.

It is a further object of the invention to provide a system for testing and or manufacturing a plurality of devices simultaneously.

It is a further object of the invention to provide an apparatus responsive to an input signal of varying wavelengths, for testing a plurality of devices at a plurality of locations.

**Statement of the Invention**

In accordance with this invention, a method of manufacturing a device is provided wherein relative alignment between at least two components is required so that light passing from one component to the other is efficiently coupled, the method comprising the ordered steps of:

a) launching a beam of light through at least one of the components to at least impinge upon the second component;
b) detecting a property of the beam of light after it has passed through the at least one of the components;
c) in dependence upon a result in step (b) using a suitably programmed processor to determine if the two components are optimally aligned while relatively moving or orienting the two components with respect to each other to optimize their relative alignment;
d) applying an adhesive to at least one of the two components so as to relatively fix the components that have been determined to be optically aligned;
e) detecting a property of the beam of light after it has passed through the at least one of the components;
f) in dependence upon a result in step (e) using the suitably programmed processor to determine if the two components are optimally aligned after the adhesive has been applied and during at least some duration while the applied adhesive is curing, and before the adhesive has completely cured, relatively moving or orienting the two components with respect to each other to optimize their relative alignment.

In accordance with the invention there is provided, a method of manufacturing an optical component comprising the steps of:
providing a plurality of optical test signals to a plurality of assembly stations adapted to assemble optical components, each assembly station having an auto-alignment means for at least partially automatically relatively aligning two optical components in dependence upon at least one of a plurality of the test signal propagating therethrough.

In accordance with the invention there is further provided, a method of manufacturing an optical component comprising the steps of:

providing a plurality of optical wavelengths to an assembly station adapted to assemble optical components, the assembly station having an auto-alignment means for at least partially automatically relatively aligning two optical components in dependence upon at least some of the optical wavelengths; providing at least one of the optical wavelengths in the form of a test wavelength to the at least two components, and automatically adjusting the relative alignment with the auto-alignment means.

In accordance with another aspect of the invention there is provided, a method of manufacturing an optical component comprising the steps of:

passing light through at least two optical components to be aligned, to determine a signal response; using a suitably programmed processor to compare the output response to a desired output response stored in a memory; and using an auto-alignment means to adjust the relative alignment between the two components to yield an output response from the adjusted aligned components that is closer to the response stored in memory.

In accordance with another aspect of the invention there is provided, an auto aligner for automatically aligning components of an optical device during manufacture of the same comprising:

at least an input channel for receiving an input signal in dependence upon a property of a beam of light launched through at least one of the components of the optical device; a microprocessor based controller for receiving at least an input signal and for providing at least a control signal in dependence upon the input signal for moving the at least two optical components relative to each other; and, at least an output channel for transmitting the control signal to at least an adjustment block for moving the at least two optical components relative to each other in dependence upon the control signal.

**Brief Description of the Drawings**

Exemplary embodiments of the invention will now be described in conjunction with the drawings, in which:

Fig. 1 is a schematic block diagram of a first embodiment of the invention wherein a first laser signal and timing signal generator block provide signals to a test station block for testing an optical device;
Fig. 2 is a schematic block diagram of a second embodiment of the invention wherein a first laser signal and timing signal generator block provided signals to multiple test stations;
Fig. 3 is a graph showing the output characteristics of a fibre grating;

Fig. 4 is a graph showing the output characteristics of an etalon in accordance with this invention;

Fig. 5 is a block circuit diagram of an alternative embodiment of the invention including circuitry for FM modulation and demodulation of a timing signal;

Fig. 6 is a block circuit diagram similar to that of Fig. 5 and including means for deriving synchronization information relating to the scanning laser output signal wavelength;

Fig. 7a is a detailed block circuit diagram of a circuit for deriving synchronization information and for modulating the scanning laser output signal with wavelength information;

Fig. 7b is a graph of two filters output responses depicting wavelength versus amplitude; Fig. 8 is a detailed block circuit diagram of an alternative circuit for deriving synchronization *information* and for modulating the scanning laser output signal with wavelength information;

Fig. 9 is a schematic diagram of an assembly station comprising an auto aligner according to the invention;

Fig. 10 is a schematic block diagram of the auto aligner according to the invention;

Fig. 11 is a flow diagram of operation of the auto aligner according to the invention;

Fig. 12 a graph illustrating range scan and optimization scan according to the invention; and,

Fig. 13 is a schematic diagram of a jig position indicator.

**Detailed Description of the Drawings**

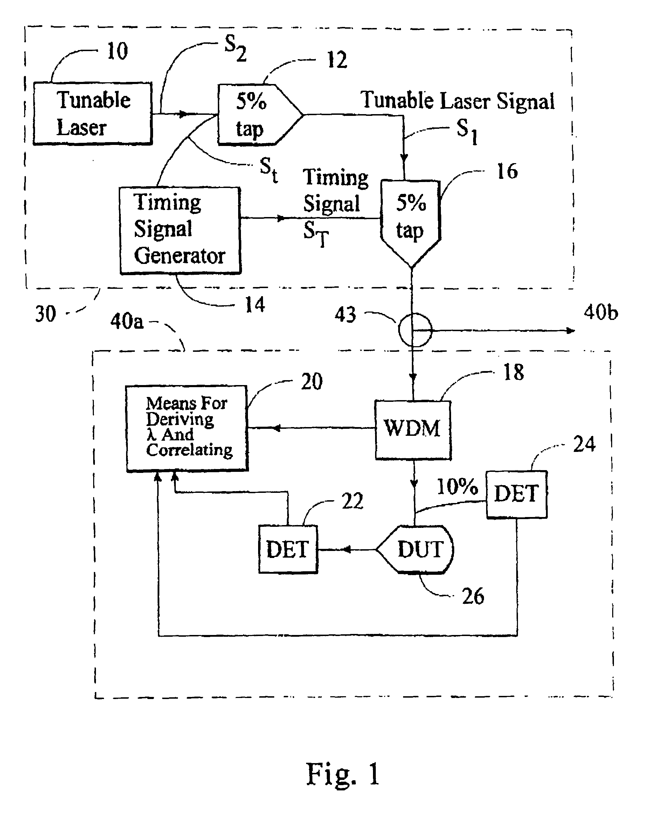

Turning now to Fig. 1, a high level block diagram is shown of a first embodiment of the invention of a test system 8 wherein a first block 30 of optical circuitry and components provides a variable wavelength optical signal for launching into a DUT 26 within a second block 40a. In *the* first block 30, the variable wavelength optical signal in the form of a tunable laser signal $S_L$ is combined with a timing signal $S_T$ for determining wavelength information relating to the tunable laser signal $S_L$. The purpose of separating the circuitry into these two blocks 30 and 40a is to isolate and separate two primary functions; firstly, that of producing a variable wavelength optical signal with an associated timing signal for providing timing information relating to the variable wavelength optical signal, and secondly, the function of testing the device or component of interest along with providing the necessary circuitry for doing so in response to the two signals $S_L$ and $S_T$. Furthermore, the separation into these two blocks has significant cost advantages as welL For example, by using a splitter 43 to split the variable wavelength optical signal along with its corresponding timing signal into two same signals, another test station 40b (not shown) identical to block 40a can be provided with test and timing signals. Since the most costly part of the entire system 8 is in the block 30 containing the tunable laser, this system obviates the requirement of providing duplication of the tunable laser to provide test signals to two or more separate test stations.

Referring now in more detail to the system 8, block 30 includes a tunable laser 10 capable of being tuned over a wavelength range of interest of 1520 nm to 1570 mn. The tunable laser 10 repeatedly varies its output starting at 1520 nm increasing continuously to 1570 nm. After reaching 1570 the laser it returns to 1520 nm and continues from 1520 nm again. Thus the laser sweeps across the wavelength range, and continues repeatedly. A 5% tap 12 is provided to receive the output signal $S_L$ from the laser, passing 5% to a timing signal generator 14, and passing 95% of the optical signal $S_L$ onwards to a means 16 of combining this signal wiih a timing signal $S_T$, The timing signal generator determines from the small portion of the output signal $S_L$, when the signal $S_L$ is at a predetermined wavelength, for example, when its wavelength is 1520 nm. Then the timing signal generator 14, generates the timing signal $S_T$ which indicates that the signal $S_L$ is at a wavelength of 1520 nm. At a subsequent time when the laser wavelength reaches the next wavelength of interest, for example 1520.01 nm, a subsequent pulse in the timing signal is sent indicating 1520.01 nm. As both of the signals $S_L$ and $S_T$ are combined by a coupling means 16, care is taken to ensure that the timing signal is at a wavelength that differs from the signal $S_L$ so that the data content of the signal $S_L$ is not affected. Essentially, the timing signal serves as a marker or indication which can be used by the block 40a, and more particularly the means for determining wavelength information 20 to calibrate the wavelength of the signal $S_L$ at specific times corresponding to the timing signal. Conveniently a splitter 43 is provided to split the signals $S_L$ and $S_T$ into other signals $S_L$ and $S_T$ that can be routed to one or more other test stations 40b, 40c.,. etc. (not shown). Of course alternatively, the timing signal could be an electrical signal distributed by electrical means.

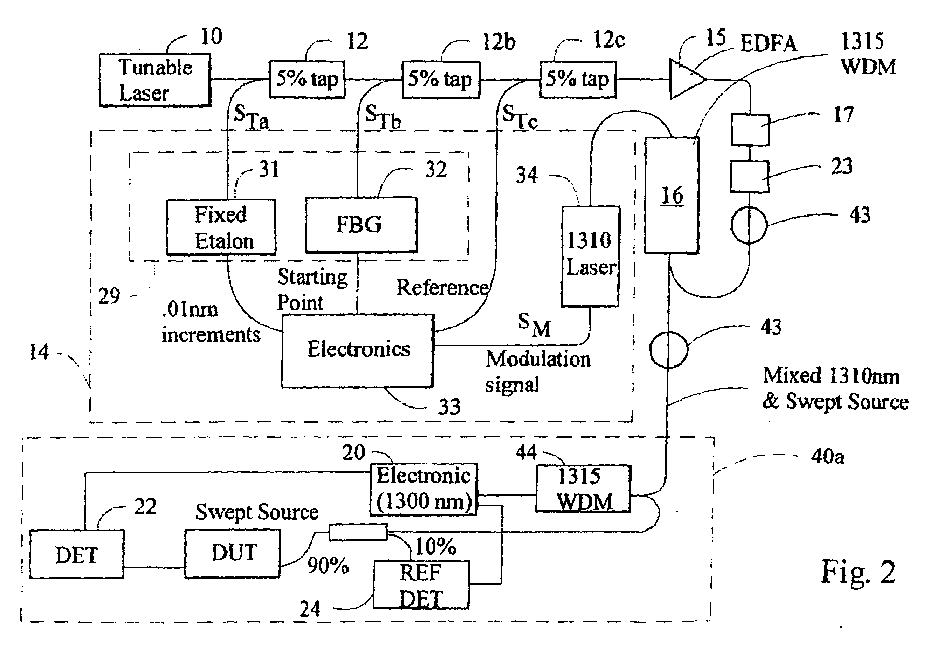

The second block 40a includes means in the form of a wavelength division (WD) filter 18 suitable for dividing or combining wavelengths, for separating the composite signal $S_L$ and $S_T$ into two separate signals. The signal $S_T$ is provided to the means for determining wavelength information 20, which also receives information from detectors 22 and 24. Substantially the entire signal $S_L$ output from the filter 18 is provided to the DUT 26; a small portion, 10% is provided to the detector 24. The output signal from the DUT 26 is directed to the detector 22. In operation the detector 24 relatively determines the intensity of the input signal to the DUT 26 and provides this information to the means 20. The actual intensity or power measured at the output of the DUT 26 is provided by the detector 22 to the same means 20; thus the means 20 can calculate the loss through the DUT 26 and can determine the corresponding wavelength of the signal $S_L$ for that particular loss calculation, in dependence upon the timing signal. Since the timing signal indicates the instant the signal $S_L$ is at a wavelength of 1520 nm., a determination can be made as to the wavelength of the signal $S_L$ at other instants in time. An embodiment for realizing this function will be described in more detail with reference to Fig. 2.

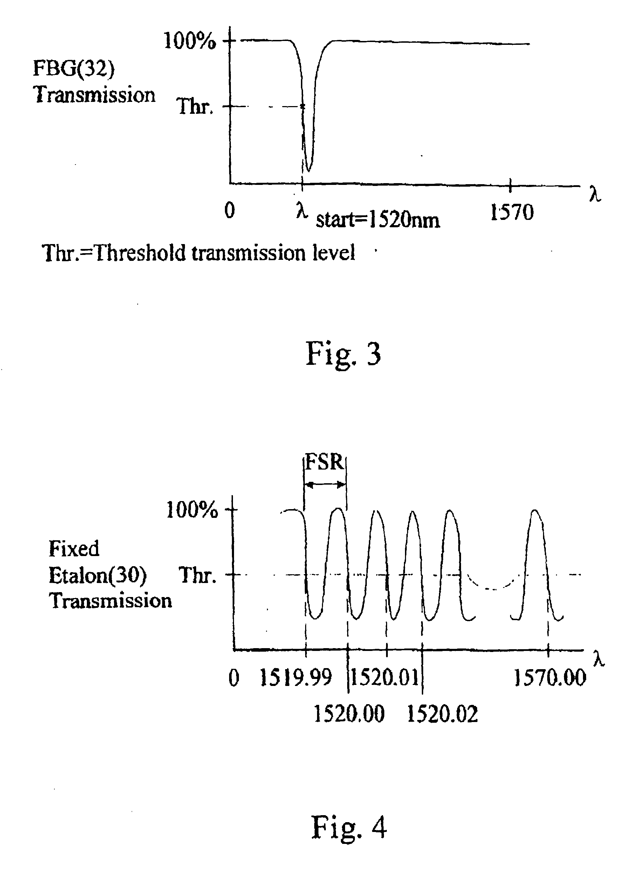

Referring now to Fig. 2, a small portion of an output signal $S_L$ of a tunable laser 10 is tapped by 5% optical taps 12, 12b and 12c, for providing three tap signals $S_{Ta}$, $S_{Tb}$ and $S_{Tc}$ which are provided to a timing signal generation circuit 14. Within this circuit 14, a fixed etalon 31, a fibre grating (FBG) 32 and electronic circuitry 33 provide a means of generating a pulsed modulation signal $S_M$ comprising a train of pulses having 0.01 nm increments in wavelength of the signal $S_L$ . The first pulse in the train of pulses, derived from the output of the FBG 32 and the output of the fixed etalon 31, corresponds to the signal $S_L$ being at a wavelength of 1520 nm; the second pulse corresponds to the signal $S_L$ being at a wavelength of 1520.01 nm; the third pulse corresponds to the signal $S_L$ being at a wavelength of 1520.02 nm, and so on, and the last pulse in the train of pulses, corresponds to the to the signal $S_L$ being at a wavelength of 1570 nm; Since the input signal $S_T$ to the fixed etalon varies in wavelength, and the etalon is selected to have a free spectral range of 1.25 GHz or about 0.01 nm. within the range of 1520 to 1570 nm, the output signal of the fixed etalon 31 is a periodic signal. Fig. 4 shows the desired output characteristic of the etalon 31. The distance between etalon reflective surfaces is calculated as follows:

$$\text{Etalon FSR[nm]}= \lambda^2/2nd$$

$$\text{Etalon FSR[GHz]}= c/2nd$$

where c= the speed of light; n= the refractive index of the material between the reflective surfaces; and d= the distance between etalon reflective surfaces.

The FBG 32 is designed to reflect the input signal when its wavelength is 1520 nm., thus providing an indication to the circuitry corresponding to a starting point, in the train of pulses. This is illustrated in Fig. 3 where at the threshold transmission level, the start is indicated to be at 1520 nm. The electronic circuit 20 in response to the periodic output from the etalon 31 and the indication of when the signal $S_L$ is at a wavelength of 1520 nm., generates the modulation signal $S_M$ which is provided to a 1310 nm. laser 34. In response to the signal $S_M$ the laser generates a train a pulses, at a wavelength of 1310 nm. having spaced apart in time, corresponding to 0.01 nm. increments of the tunable laser signal $S_T$. Thus, the modulation signal is converted to a 1310 nm. laser pulsed signal $S_{LP}$, having a wavelength significantly different from the signal $S_L$ which varies between 1520 and 1570 nm. Before the signals $S_{LP}$ and $S_L$ are combined, the signal $S_L$ is amplified by an erbium doped fibre amplifier (EDFA). The EDFA may be necessary to ensure that there is sufficient optical power at each test station to perform the loss measurement on the DUT. A tunable filter 17 tracks the laser wavelength, transmitting the laser signal but blocking the spontaneous emission of the EDFA or laser at wavelengths other than the laser wavelength.

A wavelength division mux 16 combines the amplified signal $S_L$ and the signal $S_{LP}$ into a composite signal $S_L S_{LP}$ which are fed to a 1 by 8 splitter 43 thereby providing 8 test signals. Thus, 8 test stations 40a, 40b ... 40h can be provided at different locations within a building, with the required signals and signal information with which to test optical devices. Using the device shown in Fig. 2, it takes approximately I second to test a DUT at a plurality of wavelengths from 1520 nm. to 1570 nm. in increments of about 0.01nm which corresponds to approximately 5000 data points.

In the embodiment shown in the circuit 14 of Fig. 2, an etalon is used as a means of providing a periodic signal as the input signal sweeps from 1520 to 1570 nm. Of course the etalon may be substituted with other suitable interferometric means.

Further the FBG 32 is used as a means of acquiring a relatively precise indication of its input signal being at 1520 nm. Once again, various other means can be envisaged for indicating when the input signal is at 1520 nm. The fixed etalon and FBG have been chosen in the preferred embodiment after considering cost and availability. Preferably, temperature stabilization means 29 are provided to ensure that the output of the characteristics of the etalon remain as constant as possible.

The timing signal $S_T$ need not be combined with the tunable laser signal $S_L$. Instead a second optical fibre, or a wire, can be use to transmit the timing signal to each test station. The signals are combined in the preferred embodiment to simplify the distribution of the signals among the test stations; or, alternatively, the tunable laser itself can be modulated to transmit the timing signal.

The laser signal $S_L$ can be distributed to many more than 8 test stations. The limiting factor is that sufficient optical power be present at detectors 22 and 24 to perform the loss measurement. If necessary, the laser signal $S_L$ could be split after 17, and re-amplified and split again. In this way an unlimited number of test stations can operate from one tunable laser (with multiple timing signals $S_T$ provided. )

In Fig. 2 an optional polarization state controller 23 is shown to control the polarization state of the laser signal $S_L$ transmitted to the DUT. By using this controller 23, the system can measure polarization dependent loss (PDL) at each wavelength. The controller 23 is set to one of 4 polarisation states and one wavelength sweep is made, measuring the loss of the DUT at each wavelength. The controller 23 is then set to the second polarization state and a second wavelength sweep is made. At each wavelength, 4 polarization states can be used to calculate the average loss (over all polarization states) and PDL. A system and method of measuring polarization dependent loss can be found in United States Patent 5,371,597 in the name of the applicant. The controller 23 can be placed directly after the tunable filter 17, thereby further economizing and obviating the need to have a polarization state controller 23 at each station.

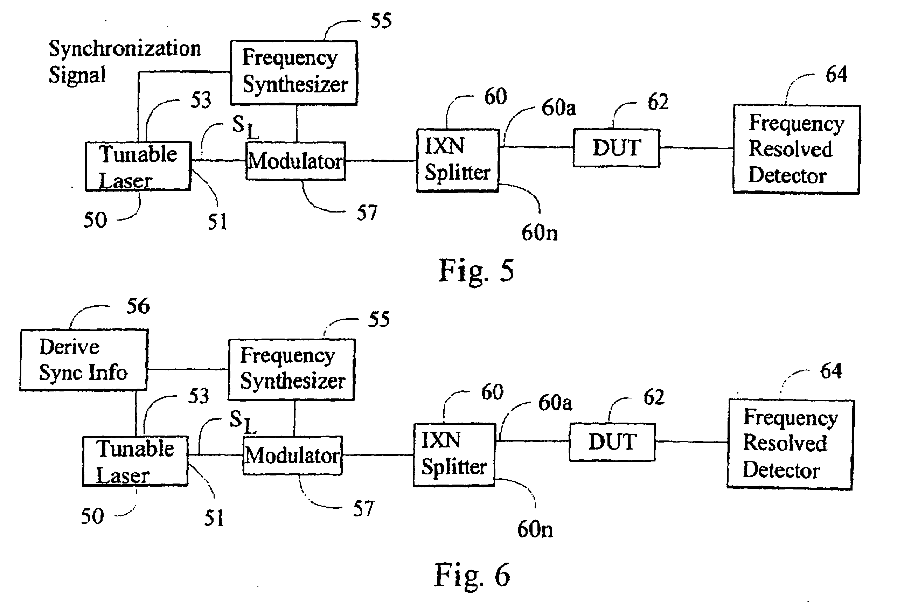

Referring now to Fig. 5 an alternative embodiment of the invention is shown, wherein a tunable laser 50 having an port 53 for receiving or providing a synchronization control Signal and an output port 51 for providing a variable wavelength optical signal in the form of a tunable laser signal $S_L$. A frequency synthesiser 55 is responsive to a synchronization control signal provided by the tunable laser 50. Upon receiving a start pulse, the circuit 55 begins providing a modulator with frequency synthesized signal for modulation with tunable laser signal, there by providing an encoded or frequency modulated laser signal $S_{LM}$ in the form of a frequency ramp indicative of the varying wavelength of the laser signal $S_L$. The signal $S_{LM}$ is then provided to a 1xN splitter 60 having outputs 60a to 60n. As is shown in the figure, the output 60a is provided to a device under test (DUT) 62 after which the output signal having propagated through the device under test is analyzed. The signal is first demodulated removing the critical wavelength information or instantaneous wavelength signature, and retrieving the relevant test information from the demodulated signal $S_L$. Alternatively, the signal $S_{LM}$ can be demodulated prior to being provided to the DUT 62. Yet further alternatively and preferably, demodulation would not he required and the wavelength information encoded in the modulated signal is detected, for example by a frequency resolved detector that includes a frequency counter that measures the instantaneous frequency. Alternatively a local oscillator and a mixer can be used to convert the modulated frequency to a D.C. voltage.

In Fig. 6 means 56 are shown disposed between the laser 50 and the frequency synthesizer 55 for deriving and providing wavelength information to the frequency synthesizer 55 from a signal provided by the tunable laser 50 that corresponds in wavelength to the signal $S_L$.

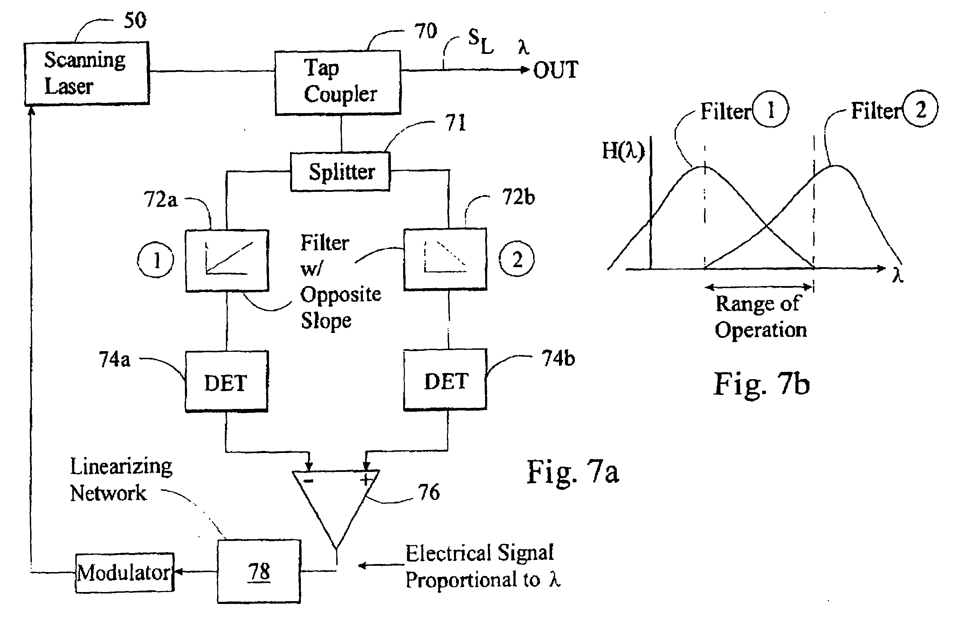

Referring now to Fig. 7a, a portion of the system shown in Fig. 6 is illustrated; means 56 shown in Fig. 6 is embodied here as follows. At the output of the tunable scanning laser 50 a small portion of the signal $S_L$ is extracted by a tap coupler 70. Two matched filters 72a and 72b are disposed to receive a same portion of the tapped signal $S_{LT}$ from a 50:50 splitter 71, and two detectors 74a and 74b respectively are disposed to receive output signals from the filters 72a and 72b. Regions of the filters having opposite (negative and positive) slopes are used. A differential amplifier 76 is electrically coupled to receive output signals from the detectors 74a and 74b and to provide a signal to a modulator 57 that is proportional to the instantaneous wavelength of the signal $S_L$. If required, a linearizing network 78 may be disposed between the differential amplifier 76 and the modulator 57.

Fig. 7b illustrates the output response of the two optical fillers 72a and 72b and the region of the filters between the two vertical dashed lines shown that is used to achieve the advantages of this embodiment.

In operation, the circuit of Fig. 7a works in the following manner. The signal $S_{LT}$ is tapped from the tunable laser output signal $S_L$ and is split substantially equally between the two filters 72a and 72b. The power detected by detectors 74a and 74b is provided to the differential amplifier 76 which provides an output signal that is substantially proportional to the wavelength of the signal $S_L$. This output signal may be linearized if required and then provided to a system to modulate the wavelength proportional signal with the signal $S_L$. This modulated swept laser signal $S_{LM}$ which includes its neat instantaneous wavelength information is then provided to a device under test. Alternatively, as was heretofore described, the wavelength information can be combined onto another optical carrier at an alternative wavelength using either digital or analog modulation techniques.

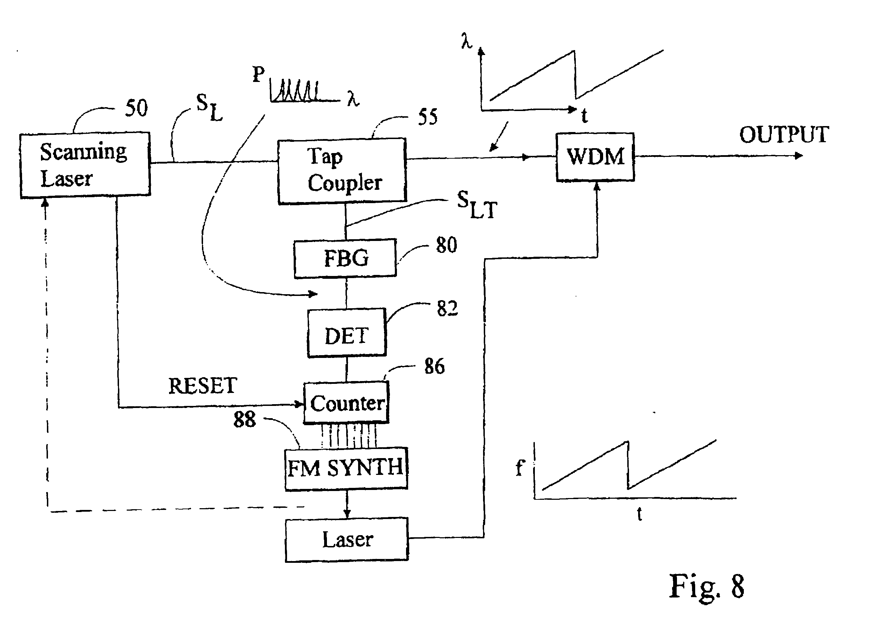

Turning now to Fig. 8 a circuit providing electronic synthesis of wavelength information is provided to communicate nearly instantaneous wavelength information of swept or changing signal $S_L$ to an optical receiver not shown. In this embodment the signal $S_L$ is tapped and the tapped signal $S_{LT}$ is provided to a Fabry Perot etalon which generates optical pulses to a detector. The free spectral range of the etalon must be selected. An electronic counter 86 counts the number of pulses from the known start of a wavelength scan. A frequency synthesizer 88 in response to the counted value in the counter 86 converts the number of pulses stored by the counter into a nearly instantaneous frequency corresponding to the frequency of the signal $S_L$. As described heretofore, this signal can be used as a modulation; the wavelength information can be combined onto another optical carrier at an alternative wavelength using either digital or analog modulation techniques.

The detailed description heretofore is primarily concerned with a test system for testing an optical component, however an aspect of this invention that will now be described concerns the manufacture and testing of optical components during their manufacture.

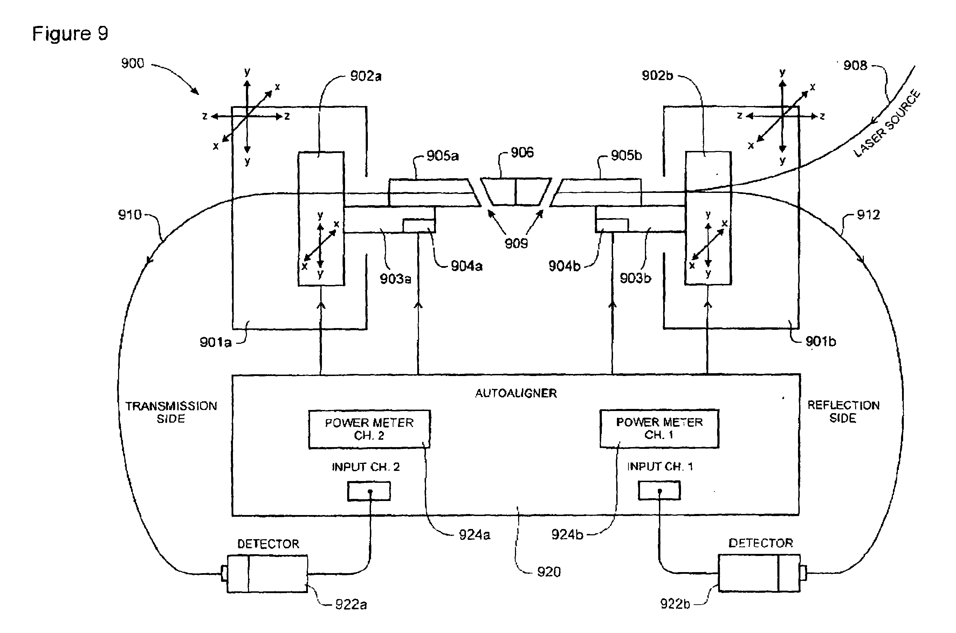

Referring now to Fig. 9, an assembly station 900 for joining three separate components of an optical device using an adhesive 909 according to the invention is shown. During manufacture, in particular while the adhesive 909 is curing, alignment of the components is tested. During the manufacturing process two tubes 905a and 905b, respectively, are affixed to an optical component 906 comprising two lenses and a filter using the adhesive 909. The tube 905b contains a first optical fiber 908 for transmitting light from a laser source providing laser light of different wavelengths and a second optical fiber 912 for transmitting light reflected at the filter. The tube 905a contains an optical fiber 910 for transmitting light passing through the filter. The components 905a and 905b are each mounted on a jig arm 903a and 903b, respectively. Each of the jig arms 903 comprise a heater 904 for heating the components 905 in order to accelerate curing of the adhesive 909. The jig arms 903 are each connected to a fine adjustment block 902. Each fine adjustment block 902 is movably mounted to a coarse adjustment block 901. The adjustment blocks 901 and 902 allow adjustment of the optical components 905a and 905b relative to the component 906. Coarse adjustment in an x, y and z co-ordinate system along x, y, and z axes of the optical components 905a and 905b with respect to the component 906 is achieved using coarse adjustment blocks 901a and 901b, respectively. The coarse adjustment is performed manually by aligning the components 905a and 905b to the component 906 center to center at a predetermined distance. Alternatively, the coarse adjustment blocks 901a and 901b are driven by a motor. Further alternatively, the coarse adjustment blocks 901a and 901b comprise actuators for rotating the components 905a and 905b relative to the component 906.

Fine adjustment of the components 905a and 905b relative to the component 906 is provided by the fine adjustment blocks 902. The fine adjustment blocks 902 provide adjustment of the components 905 in an x, y and z co-ordinate system along x and y axes and are each driven by a linear motor for each direction. The linear motors are controlled by an auto aligner 920 according to the invention. The auto aligner 920 comprises a processor for determining a control signal in dependence upon an input signal and for providing the same to the linear motors. The input signals are provided by detectors 922a and 922b connected to the optical fibers 910 and 912 for capturing the intensity of beams of light transmitted through the optical component 906 - detector 922a - or reflected within the optical component 906 - detector 922b. The captured light intensity is displayed using power meters 924a and 924b. In operation the auto aligner according to the invention adjusts the components 905 with respect to the component 906 in dependence upon the input signals provided by the detectors 922 such that the captured light intensity is at maximum. Adjustment is performed by the auto aligner 920 before and after application of the adhesive 909.

Optionally, the fine adjustment blocks 902 comprise actuators for moving the components 905 in z direction and/or rotating the components 905 relative to the component 906.

Alternatively, other light properties than intensity may be detected in order to adjust the components. For example, for manufacturing optical devices sensitive to polarization it is preferable to optimize alignment of the components with respect to the polarization and to lessen PDL.

Further alternatively, the components are adjusted using the auto aligner such that an output response from the adjusted aligned components is closer to a desired response stored in memory.

As is evident to a person of skill in the art the station 900 may be modified for the manufacture of numerous other optical devices, for example connectors - affixing one or more optical fibers within tubes.

Furthermore, the auto aligner according to the invention may be used for combining optical components using vitrification instead of an adhesive.

In another embodiment a plurality of assembly stations having an auto aligner according to the invention are provided with a plurality of test signals from one laser source for relatively aligning optical components in dependence of at least one of the test signals propagating therethrough. The test signals comprise a plurality of different wavelengths, for example for testing components where light is transmitted or reflected depending on the wavelength. Furthermore, the test signals may comprise a plurality of different polarization states in order to align components sensitive to polarization.

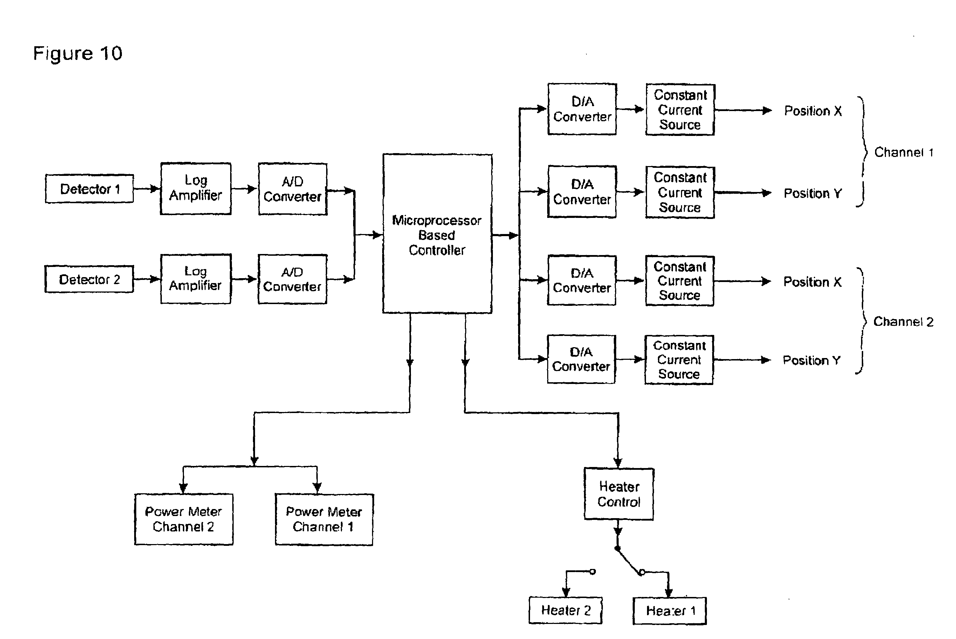

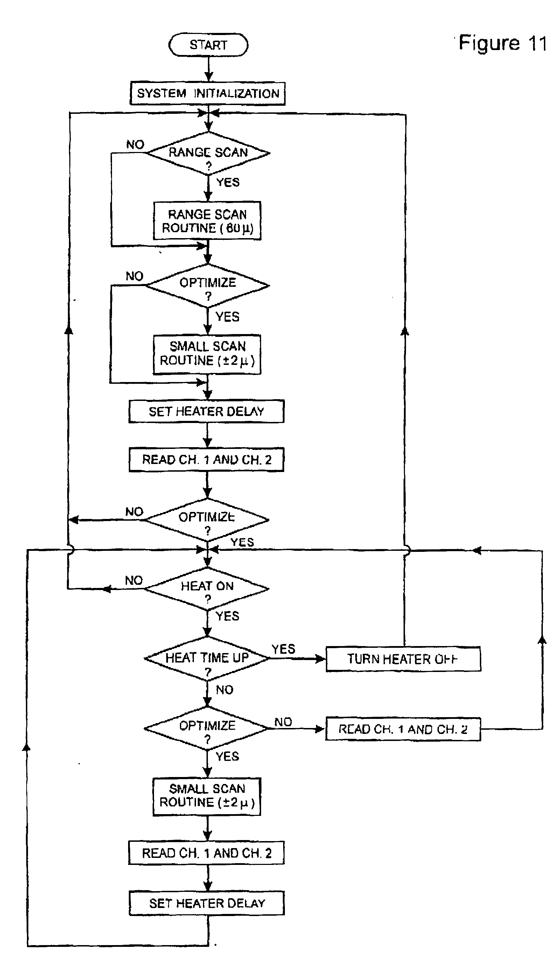

Referring now to Fig. 10, a block diagram of an auto aligner according to the invention is shown. Signals indicative of the laser beam intensity captured by the detectors 922 are amplified using, for example, a log amplifier. The amplified signals are then digitised using an A/D converter. The digitised detector signals are then provided to a microprocessor based controller. Based on the detector signals the controller provides control signals for controlling the fine adjustment blocks 902 and for controlling timing of the heaters 904. The controller provides a control signal for each linear motor of the fine adjustment blocks. Each control signal is converted into an analog signal for regulating a constant current source in order to provide constant current to the linear motor in dependence on the control signal. Furthermore, the amplified and digitised detector signals are provided to power meters 924 for display in order to assist an operator. Operation of the auto aligner will later he described in conjunction with a flow diagram shown in Fig. 11.

Optionally, the auto aligner according to the invention comprises means for auto aligning more than two adjustment blocks in order to align more components than shown in Fig. 9. The auto alinger may also comprise means for receiving more than two detector signals. Furthermore, the auto aligner provides control signals for aligning components along more than two axes of a co-ordinate system and /or for rotating components relative to each other.

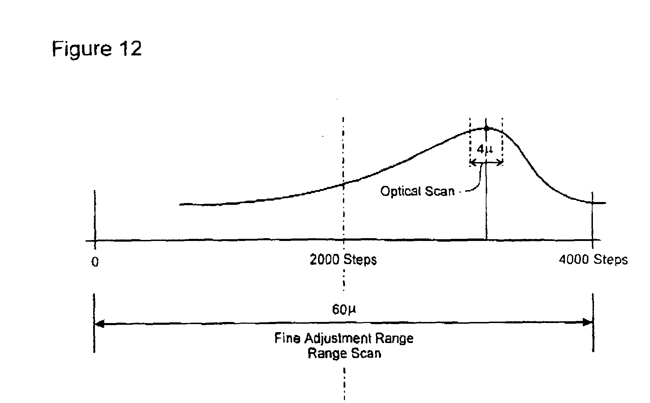

A method of manufacturing a device according to the invention using the auto aligner will now be described in conjunction with the flow diagram shown in Fig. 11. After affixing the tubes 905 to the jig arms 903, the tubes are centered with respect to the optical component 906 and the gaps between the components are adjusted using the coarse adjustment blocks 901. For example, the tubes are hold in place using a V - groove within the jig arms 903 and clamps. The coarse adjustment may be done manually or by using motors controlled by an operator. Then a beam of light having a predetermined wavelength, for example light having a wavelength that is reflected at the filter for aligning the reflection side - components 905b and 906, is launched through the device to be assembled and the auto aligner system is initialized. After initialization of the system the auto aligner performs a range scan in order to find a relative position between the components 905b and 906 where the light captured by the detector 922b of the reflected beam is at maximum intensity. The range scan is a multi - peak detection scan to find the highest peak in a multi peak optical response. The range scan scans a fine range of 60 µ in 4000 steps as shown in Fig. 12 using the fine adjustment block 902b. After the entire fine range is scanned and a peak value is found positioners of the jig arm 903b lock on the found maximum value. The range scan may be performed as follows in horizontal direction and in vertical direction:

> from center to righ/upper limit of the range and back to the center;
> from the center to left/lower limit of the range and back to the center; and,
> from the center to location where the peak value of the intensity was found.

Then, a light beam having a different predetermined wavelength, which is transmitted through the filter, is launched through the device. The aligning process is then repeated for adjusting the relative position between the components 905a and 906. After the range scan is finished an OK LED turns on. This scan is performed only once but can be started again if necessary.

Alternatively, the range scan is performed in more than the two co-ordinate directions as described above.

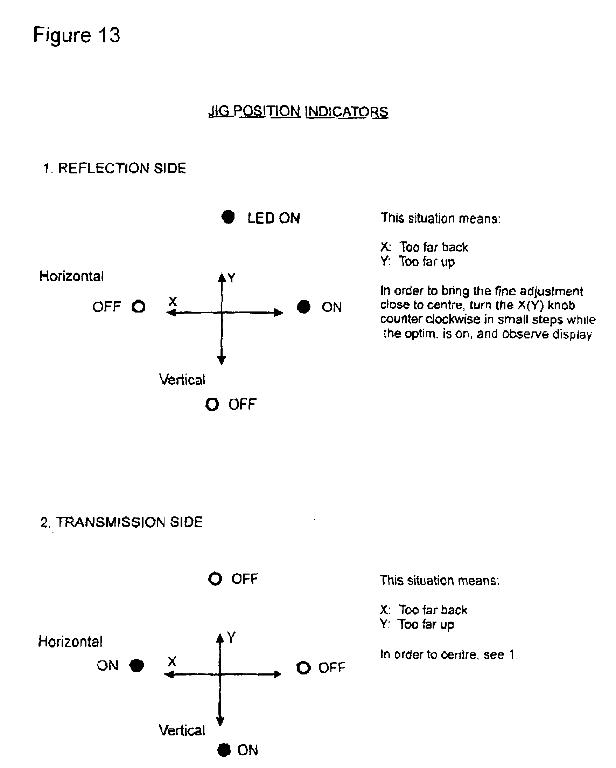

The range scan is then followed by an optimization scan, usually initiated by the operator. Optimization and subsequent application of adhesive 909 is first performed on the reflection side and after curing of the adhesive 909 the process is repeated for the transmission side. The optimization scan is performed In the same way as the range scan but in a range of ± 2µ around the previously found peak position as indicated in Fig. 12. The optimization scan is performed continuously during manufacture until the adhesive 909 starts to thicken. When the adhesive thickens the fine adjustment block experiences an increasing resistance against movement of the jig arm 903 and when a predetermined level of resistance is reached the auto aligner stops the optimization scan. Alternatively, the optimisation scan is stopped by the operator. When the peak position moves due to optical or mechanical causes, for example forces acting onto the components 905 and 906 due to shrinkage of the curing adhesive 909, the positioners controlled by the auto aligner are following the peak, thus maintaining the alignment. During manufacture the operator is enabled to watch the optimization scan in progress on four LEDs. The four LEDs having a same brightness or close indicates that the jig arm 903 is positioned approximately at the center of the fine adjustment range. Non-symmetric brightness indicates that the peak position is close to one side, as shown in Fig. 13. In this case the positioners have to be centered by moving manually the jig arm 903 until all four LEDs have a same brightness. Furthermore, flashing green lights indicate that the optimization scan operates close to a limit of the fine adjustment range and flashing red lights indicate that the limit has been reached. It is not recommended to cure the adhesive in this case. because the curing adhesive may cause a further drift and, therefore, an out of range situation.

Of course, there are numerous other possibilities indicating the position of the jig arm.

For curing the adhesive a heater 904 is affixed to each jig arm 903. The heater 904 is activated by the operator after an optimum relative position has been found. 3 or 4 minutes after the heater 904 has been activated, that is when the adhesive starts to thicken, the optimization scan is turned off automatically. While curing the adhesive thickens thus increasing resistance; against any movement and inhibiting the fine adjustment block from further movement. At the time when the fine adjustment block is inhibited from any further movement a "GLUE" LED is turned on and 10 seconds later the optimization scan is turned off. The heater stays on for another 7 minutes in order finish curing the adhesive and is then turned off automatically. After turning the heater on, but before the "GLUE" LED turns on, the operator is able to adjust the gap in order to obtain minimum losses. After the "GLUE" LED turns on no adjustments are possible. Optionally, the heater can be turned off and on by the operator at any time. The "CHANNEL" set determines which side - reflection side or transmission side - will be heated. If the channel is set to "reflection" the heater on the reflection side will be activated if the "Heater" button is pressed. If, subsequently the channel is switched to "transmission" the "reflection" heater will still be on. This allows heating on one side while optimizing the other side.

Timing of the heaters 904 varies for different applications comprising different components and/or different adhesives. Furthermore, some adhesives do not require heating.

There is a significant advantage to aligning components before, and after the application of an adhesive. For instance, it is found that first aligning two components such that they provide optimum coupling of a light signal passing therethrough, and then performing a final step of applying adhesive, often provides spurious results; as the adhesive cures, it tends to shrink and pull the components out of alignment. Therefore, automatically aligning optical components during curing of an adhesive using the auto aligner according to the invention is highly advantageous by obviating the practice of discarding components that don't meet a required specification thus offering substantial cost savings in the manufacture of numerous types of optical devices.

Of course numerous other embodiments can be envisaged without departing from the spirit and scope of the invention.

**Claims**

1. A method of manufacturing a device wherein relative alignment between at least two components is required so that light passing from one component to the other is efficiently coupled, the method comprising the ordered steps of:

   a) launching a beam of light through at least one of the components to at least impinge upon the second component;
   b) detecting a property of the beam of light after it has passed through the at least one of the components;
   c) in dependence upon a result in step (b) using a suitably programmed processor to determine if the two components are optimally aligned while relatively moving or orienting the two components with respect to each other to optimize their relative alignment;
   d) applying an adhesive to at least one of the two components so as to relatively fix the components that have been determined to be optically aligned;
   e) detecting a property of the beam of light after it has passed through the at least one of the components;
   f) in dependence upon a result in step (e) using the suitably programmed processor to determine if the two components arc optimally aligned after the adhesive has been applied and during at least some duration while the applied adhesive is curing, and before the adhesive has completely cured, relatively moving or orienting the two components with respect to each other to optimize their relative alignment.

2. A method of manufacturing as defined in claim 1, wherein step (a) includes launching the beam of light through the two components, wherein the property is intensity.

3. A method of manufacturing as defined in claim 2, wherein step (c) is performed by determining if the light passing through the two components is at a maximum intensity.

4. A method of manufacturing as defined in claim 2, wherein step (c) is performed by first finding a maximum intensity peak in a range of wavelengths of interest, so as to eliminate intensity peaks which have an intensity less than the maximum intensity peak.

5. A method of manufacturing as defined in claim 2, further comprising the step of automatically varying the polarization of light passing through the two components while performing step (e) or (f).

6. A method of method of manufacturing as defined in claim 5, further comprising the steps of automatically rotating the relative position of the elements to lessen the polarization sensitivity of the two components.

7. A method of method of manufacturing as defined in claim 5, further comprising the steps of automatically rotating the relative position of the elements to lessen the polarization sensitivity of the two components after performing step (d).

8. A method of manufacturing a device wherein relative alignment between at least two components as defined in claim 1, wherein the step of relatively moving or orienting the two components with respect to each other to optimize their relative alignment is performed by an auto-alignment means in dependence upon a feedback signal.

9. A method of manufacturing an optical component comprising the steps of:
   providing a plurality of optical test signals to a plurality of assembly stations adapted to assemble optical components, each assembly station having an auto-alignment means for at least partially automatically relatively aligning two optical components in dependence upon at least one of a plurality of the test signal propagating therethrough.

10. A method of manufacturing an optical component as defined in claim 9, wherein the optical test signals each provide a plurality of test wavelengths to the auto-alignment means for at least partially automatically relatively aligning the two optical components.

11. A method of manufacturing an optical component as defined in claim 9 wherein the optical test signals provide light having a plurality of test polarization states to the auto-alignment means for automatically relatively aligning the two optical components.

12. A method of manufacturing an optical component comprising the steps of:

providing a plurality of optical wavelengths to an assembly station adapted to assemble optical components, the assembly station having an auto-alignment means for at least partially automatically relatively aligning two optical components in dependence upon at least some of the optical wavelengths; providing at least one of the optical wavelengths in the form of a test wavelength to the at least two components, and automatically adjusting the relative alignment with the auto-alignment means.

13. A method as defined in claim 12 wherein the auto-alignment means adjusts the relative alignment of the two components after a signal response is determined for a predetermined wavelength of light passing therethrough, to alter the signal response for that predetermined wavelength.

14. A method as defined in claim 13, wherein adhesive is applied after the relative alignment is adjusted by the auto-alignment means.

15. A method as defined in claim 14 wherein the auto-alignment means is programmed to continue adjusting the relative alignment of the two components after the adhesive is applied.

16. A method as defined in claim 15 wherein the auto-alignment means is programmed to continue adjusting the relative alignment of the two components after the adhesive is applied and during an interval of time while the adhesive is curing.

17. A method of manufacturing an optical component comprising the steps of:

passing light through at least two optical components to be aligned, to determine a signal response;
using a suitably programmed processor to compare the output response to a desired output response stored in a memory;
and using an auto-alignment means to adjust the relative alignment between the two components to yield an output response from the adjusted aligned components that is closer to the response stored in memory.

18. A method of manufacturing an optical component as defined in claim 17, further comprising the step of using the auto-alignment means to adjust the relative alignment between the two components after adhesive is applied to at least one of the two components.

19. A method of manufacturing an optical component as defined in claim 17, wherein the polarization of light passing through the at least two components is changed as measurements are recorded.

20. A method of manufacturing an optical component as defined in claim 19, wherein the alignment is changed by the auto-aligner so as to lessen the PDL of the at least two components.

21. A method of manufacturing an optical component as defined in claim 20, wherein the relatively alignment is changed after adhesive is applied to yield a desired output response.

22. A method of manufacturing an optical component as defined in claim 20, wherein the relative alignment is changed after adhesive is applied to vary the PDL of the device as the adhesive is curing.

23. An auto aligner for automatically aligning components of an optical device during manufacture of the same comprising:

at least an input channel for receiving an input signal in dependence upon a property of a beam of light launched through at least one of the components of the optical device;
a microprocessor based controller for receiving at least an input signal and for determining at least a control signal in dependence upon the input signal for moving the at least two optical components relative to each other; and,
at least an output channel for transmitting the control signal to at least an adjustment block for moving *the* at least two optical components relative to each other in dependence upon the control signal.

Fig. 1

Fig. 2

EP 1 134 607 A2

FBG(32)
Transmission

100%

Thr.

0   λ start=1520nm   1570   λ

Thr.=Threshold transmission level

## Fig. 3

Fixed
Etalon(30)
Transmission

FSR

100%

Thr.

0   1519.99  1520.01   1570.00   λ

1520.00   1520.02

## Fig. 4

EP 1 134 607 A2

Synchronization
Signal

Frequency
Synthesizer — 55

Tunable
Laser

$S_L$

Modulator

IXN
Splitter — 60

60a

DUT — 62

Frequency
Resolved
Detector — 64

50 — 53 — 51 — 57 — 60n

Fig. 5

Derive
Sync Info — 56

Frequency
Synthesizer — 55

Tunable
Laser

$S_L$

Modulator

IXN
Splitter — 60

60a

DUT — 62

Frequency
Resolved
Detector — 64

50 — 53 — 51 — 57 — 60n

Fig. 6

Scanning Laser — 50

Tap Coupler — 70

$S_L$  λ → OUT

Splitter — 71

72a

① Filter w/ Opposite Slope

72b ②

74a DET

DET 74b

Linearizing Network

− +

76

Modulator ← 78 ← Electrical Signal Proportional to λ

Fig. 7a

Filter ①   Filter ②

$H(\lambda)$

λ

Range of Operation

Fig. 7b

EP 1 134 607 A2

Fig. 8

Figure 9

EP 1 134 607 A2

Figure 10

EP 1 134 607 A2

Figure 11

```
                    ( START )
                        |
              ┌─────────────────────┐
              │ SYSTEM INITIALIZATION │
              └─────────────────────┘
                        |
    NO          ╱─────────────╲
  ◄─────────────   RANGE SCAN
                 ╲      ?      ╱
                        | YES
              ┌─────────────────────┐
              │    RANGE SCAN        │
              │  ROUTINE ( 80 µ )    │
              └─────────────────────┘
                        |
    NO          ╱─────────────╲
  ◄─────────────    OPTIMIZE
                 ╲      ?      ╱
                        | YES
              ┌─────────────────────┐
              │    SMALL SCAN        │
              │  ROUTINE ( ±2 µ )    │
              └─────────────────────┘
                        |
              ┌─────────────────────┐
              │   SET HEATER DELAY   │
              └─────────────────────┘
                        |
              ┌─────────────────────┐
              │  READ CH. 1 AND CH. 2 │
              └─────────────────────┘
                        |
    NO          ╱─────────────╲
  ◄─────────────    OPTIMIZE
                 ╲      ?      ╱
                        | YES
    NO          ╱─────────────╲
  ◄─────────────     HEAT ON
                 ╲      ?      ╱
                        | YES
            ╱─────────────╲   YES   ┌──────────────────┐
             HEAT TIME UP  ───────►│  TURN HEATER OFF  │
            ╲      ?      ╱         └──────────────────┘
                        | NO
            ╱─────────────╲   NO    ┌──────────────────────┐
             OPTIMIZE      ───────►│ READ CH. 1 AND CH. 2  │
            ╲      ?      ╱         └──────────────────────┘
                        | YES
              ┌─────────────────────┐
              │    SMALL SCAN        │
              │  ROUTINE ( ±2 µ )    │
              └─────────────────────┘
                        |
              ┌─────────────────────┐
              │  READ CH. 1 AND CH. 2 │
              └─────────────────────┘
                        |
              ┌─────────────────────┐
              │   SET HEATER DELAY   │
              └─────────────────────┘
```

19

Figure 12

0                                    2000 Steps                            4000 Steps

4μ

Optical Scan

60μ

Fine Adjustment Range
Range Scan

# Figure 13

JIG POSITION INDICATORS

## 1. REFLECTION SIDE

● LED ON

This situation means:

X: Too far back
Y: Too far up

In order to bring the fine adjustment close to centre, turn the X(Y) knob counter clockwise in small steps while the optim. is on, and observe display

Horizontal

OFF O ←―――X――――→ ● ON

↑Y

Vertical

O OFF

## 2. TRANSMISSION SIDE

O OFF

This situation means:

X: Too far back
Y: Too far up

In order to centre, see 1.

Horizontal

ON ● ←―――X――――→ O OFF

↑Y

Vertical

● ON